# EUROPEAN PATENT APPLICATION

(11) **EP 4 434 884 A1**
(43) Date of publication of application: **25.09.2024**
(21) Application number: 23163152.4
(22) Date of filing: 21.03.2023
(51) Int. Cl.: B64D 11/06, B60R 3/02, E06C 1/00

(54) **DEPLOYABLE STEP**

(71) Applicant: Safran Seats, 78370 Plaisir (FR); Safran Seats GB Limited, Cwmbran NP44 3HQ (GB)
(72) Inventor: BERNARDO DE MORAIS, José, 77550 Moissy-Cramayel (FR); CAZALIS, Olivier, 77550 Moissy-Cramayel (FR); LIGONNIERE, Laurent, 77550 Moissy-Cramayel (FR); WOODINGTON, James, CWMBRAN, NP44 3HQ (GB)
(74) Representative: Marconnet, Sébastien

(57) **Abstract**

The invention relates to a step assembly for a furniture (10) comprising a structural element (18) and a step (21) movable relative to the structural element (18) between
- a stowed position, in which the step (21) is flush with regard to the structural element (10), and
- a deployed position, in which the step (21) protrudes with regard to the structural element (10) to provide a step surface on which one can stand on.

## Description

The field of the invention relates to furniture, in particular passenger seats for passenger vehicles, and, more particularly, to deployable steps for such furniture, in particular passenger seats, including but not limited to aircraft passenger seats. Passenger vehicles, such as aircraft, buses, trains, ships, and automobiles, include furniture, such as passenger seats for passengers to sit in and utilize during travel. Sometimes, it may be preferable or necessary to reach some area located high above the furniture. For example, aircraft, buses, trains and other vehicles sometimes include overhead stowage compartments that a passenger may use to stow his or her luggage during travel. Most furniture does not include any mechanism to facilitate reaching such areas.

The invention aims to remedy to these drawbacks by proposing a step assembly for a furniture comprising a structural element.

More particularly, the step is movable relative to the structural element between
- a stowed position, in which the step is flush with regard to the structural element, and
- a deployed position, in which the step protrudes with regard to the structural element to provide a step surface on which one can stand on.

According to the invention, the structural element may comprise an upper portion, a lower portion and a bumper positioned between the upper portion and the lower portion, the step being integrated within the bumper.

According to the invention, the step may be slidably connected to the structural element.

According to the invention, the step assembly may comprise a guiding support fastened to a rear face of the structural element, the guiding support providing a guiding in translation of the step between the stowed position and the deployed position.

According to the invention, the step may extend within the same horizontal plane in the stowed position and in the deployed position.

According to the invention, the step may be rotatably connected to the structural element around a pivot axis.

According to the invention, the pivot axis may be substantially vertical, so that the step extends within the same horizontal plane in the stowed position and in the deployed position.

According to the invention, the pivot axis may be substantially horizontal, so that the step extends within two different planes when in the stowed position and when in the deployed position.

According to the invention, the step may be positioned on a lateral face of the structural element.

According to the invention, the step may be positioned within a cavity, when the step is in the stowed position. The cavity may be made in a lateral face of the structural element, particularly within the thickness of the structural element.

According to the invention, the step may have an elongated shape and/or a flat shape.

The invention also relates to a furniture comprising such a step assembly. The furniture may be a seat, a seating unit, a cabin partition, a monument, a toilet module, a lavatory module, a galley, a coat closet, a class divider and/or an aircraft cabin equipment door.

According to the invention, the structural element may be a passenger seat, an element of a seat structure, a seat backrest, a side module, a fixed shell and/ or an armrest.

The invention will be better understood and other features and advantages will become apparent after reading the following detailed description including embodiments, given as illustrative examples, with reference to the accompanying figures, given as non-limiting examples, which could be used to better understand the invention and the description of its implementation and which could eventually contribute to its definition, in which:
- [Fig. 1] Figure 1 shows a perspective view of a furniture, such as seating unit, according to the present invention;
- [Fig. 2a] [Fig. 2b] [Fig. 2c] Figures 2a, 2b, and 2c show respectively a perspective view, a sectional view along plane A-A of figure 2a and a sectional view along plane B-B of figure 2a of an step assembly according to a first embodiment of the present invention;

- [Fig. 2d] Figure 2d depicts a use of the step assembly of figures 2a-2c;
- [Fig. 3a] [Fig. 3b] Figures 3a and 3b show respectively a perspective view and a sectional view along plane C-C of figure 3a of an step assembly according to a second embodiment of the present invention;
- [Fig. 4a] [Fig. 4b] [Fig. 4c] Figures 4a, 4b, and 4c show respectively perspective views of a step in a stowed position and in a deployed position, and an exploded view of an alternative of the step assembly according to the second embodiment of the present invention;
- [Fig. 5a] [Fig. 5b] Figures 5a and 5b show respectively a perspective view and an exploded view of an step assembly according to a third embodiment of the present invention; and
- [Fig. 6a] [Fig. 6b] [Fig. 6c] Figures 6a, 6b, and 6c show respectively perspective views of a step in a stowed position and in a deployed position, and an exploded view of an step assembly according to a fourth embodiment of the present invention.

It should be noted that, in figures, structural and/or functional elements common to the different embodiments may have the same references. Thus, unless otherwise stated, such elements have identical structural, dimensional and material properties. Relative terms like "front", "rear", "upper", or "bottom" shall be understood by reference to their ordinary meaning for a person standing in front of a structural element comprising a step in use according to the invention.

The subject matter of embodiments of the present invention is described here with specificity to meet statutory requirements, but this description is not necessarily intended to limit the scope of the claims. The claimed subject matter may be embodied in other ways, may include different elements or steps, and may be used in conjunction with other existing or future technologies.

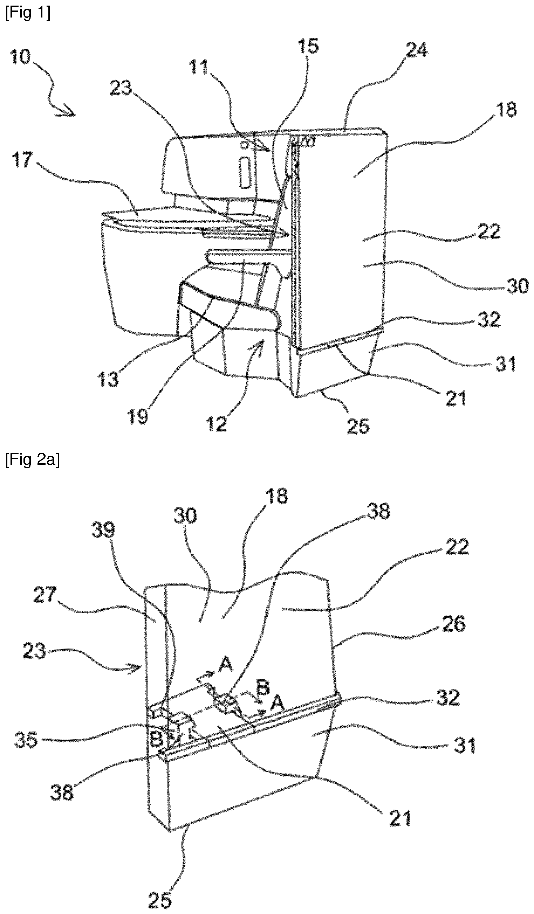

Figure 1 shows a perspective view of a furniture 10, such as a seating unit 10, for a vehicle, such as an aircraft, according to the present invention.

According to the shown embodiments to particularly disclose the invention, a seating unit 10 is used as an example of the furniture 10 according to the invention.

The seating unit 10 comprises a passenger seat 11. The passenger seat 11 may comprise a seat structure 12 supporting a seat pan 13 and a seat backrest 15. The passenger seat 11 may offer different comfort positions to the passenger, from a "seating" position, in which the seat pan 13 and the seat backrest 15 are substantially arrange to be perpendicular one to the other, to a "lying" position, in which the seat pan 13 and the seat backrest 15 are substantially aligned one to the other to define a substantially longitudinal lying surface for the passenger, particularly a substantially longitudinal horizontal lying surface for the passenger. The passenger seat 11, may be associated to a side module 17 that may be used as a fixed shelf. The side module 17 may comprise storing functions and/or an internal recess, which may define a footrest intended to receive the feet of a passenger positioned behind the passenger seat 11.

The seating unit 10 may also comprise an armrest 19.

The furniture 10 may also comprise a structural element 18.

A structural element refers to any component or part of an interior cabin of a vehicle, such as an aircraft, that provides structural support and contributes to the overall strength and rigidity of a furniture.

The structural element is designed to withstand various types of stresses and loads that may be applied onto the furniture. The structural element may be made from lightweight materials such as composite materials, aluminum alloys, and other advanced materials that provide high strength-to-weight ratios and good durability. In addition, the structural element may also provide other functions, such as acoustic insulation, thermal insulation and/or fire protection.

The structural element is critical to ensuring the safety and comfort of passengers and crew members during flight. The structural element must be designed to meet strict safety regulations and performance standards to ensure the overall integrity of the furniture.

For the seating unit 10, the structural element 18 may be a fixed shell consisting in a fixed wall which may provide separation between the passenger seat 11 and an aisle of the aircraft or between two adjacent passenger seats. The fixed shell is configured to be positioned at least partially around the passenger seat 11 to create an interior space fully or partially enclosed in which the passenger seat 11 is located. Such fixed shell ensures privacy to the passenger seated in the passenger seat 11. According to the invention, the furniture 10 comprises a step 21. The step 21 is connected to the structural element 18 of the furniture 10, particularly the structural element 18 of the seating unit 10.

The step 21 is movable between a stowed position and a deployed position relative to the structural element 18 of the furniture 10. In the stowed position, the step 21 is flush with regard to the structural element 18. In the deployed position, the step 21 protrudes with regard to the structural element 18 to provide a step surface on which one, particularly a crew member; e.g. a flight attendant, and/or a passenger, can stand on to reach an high area, such as an overhead storage compartment. For the seating unit 10, the structural element 18 may be selected amongst the passenger seat 11, the seat structure 12, an element of such seat structure 12, the seat backrest 15, the side module 17, the fixed shell and/ or the armrest 19.

As illustrated in figures 1, 2a, 3a, 4a, 4b, 6a and 6b, the structural element 18, in particular the fixed shell or the armrest 19, may comprise a front face 22, a rear face 23, an upper face 24 and/or a bottom face 25.

The structural element 18 also comprises at least a lateral face 26, particularly two lateral faces 26, 27, extending along the thickness of the structural element 18 between the front face 22 and the rear face 23 of the structural element 18.

The structural element 18 may be divided into different portions, particularly an upper portion 30 and a lower portion 31.

The structural element 18 may also comprise a bumper 32, which is particularly positioned between the upper portion 30 and the lower portion 31. The bumper 32 provides protection against impacts that can happen within the aircraft cabin, such as impacts between the structural element 18 and service trolley or luggage.

The step 21 may be integrated within the bumper 32, as particularly illustrated in figures 2a, 3a, 4a, 5a. The step 21 extends within the width of the bumper 32 measured in a vertical direction. The step 21 may have the same width as the bumper 32.

In the stowed position, a front face of the step 21 is substantially flush with a front face of the bumper 32. In other words, in the stowed position, the front face of the step 21 and the front face of the bumper 32 extends substantially within the same plane, for example a vertical plane.

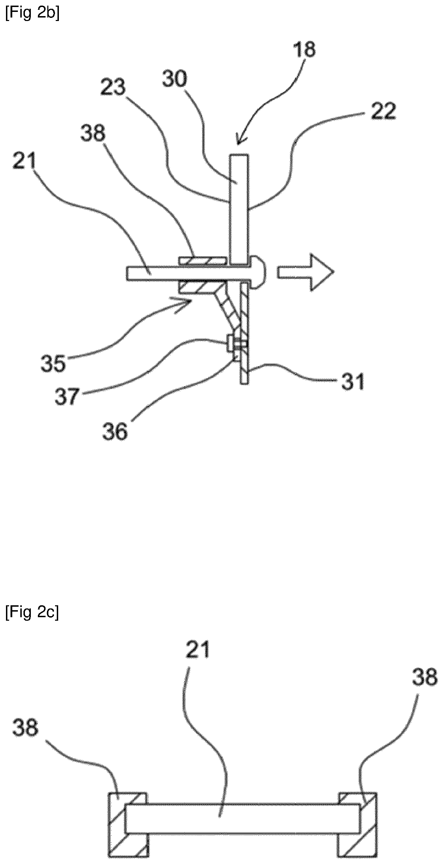

According to a first embodiment of the present invention as depicted in relation with figures 2a, 2b and 2c, the step 21 is slidably connected to the structural element 18 of the furniture 10, particularly the fixed shell of the seating unit 10.

In that respect, a guiding support 35 is fastened to the rear face 23 of the structural element 18. The guiding support 35 provides a guiding in translation of the step 21 between the stowed position and the deployed position.

As illustrated in figure 2b, the guiding support 35 may comprise a fastening portion 36. The fastening portion 36 may comprise an aperture allowing insertion of a fastening device 37 in order to fasten the guiding support 35 to the rear face 23 of the structural element 18. The fastening device 37 may be a screw, a rivet... Alternatively and/or additionally, the fastening device 37 may be a chemical fastening device, such as glue or any other fastening device adapted to the application.

In a particular embodiment of the invention, the guiding support 35 comprises at least one guiding portion 38, for instance two guiding portions 38. The guiding portion 38 may define a channel for guiding, particularly in translation, the step 21. The guiding portion 38 may have a U shape. A lateral portion of the step 21 may be positioned within the recess defined by walls of the corresponding U-shape guiding portion 38.

In such embodiment, the step 21, more specifically an upper face of the step 21 forming a step surface on which one, for example a passenger and/or a crew member; e.g. an flight attendant, can stand on, extends within a same horizontal plane either in the stowed position or in the deployed position.

The step 21 may comprise an enlarged portion 39 arranged at an end of the step 21. The enlarged portion 39 may provide a stop in translation of the step 21, when the step 21 is in the deployed position. As a particular arrangement, the enlarged portion 39 has a width superior to a width of the channel for guiding in translation the step 21 measured between two guiding portions 38.

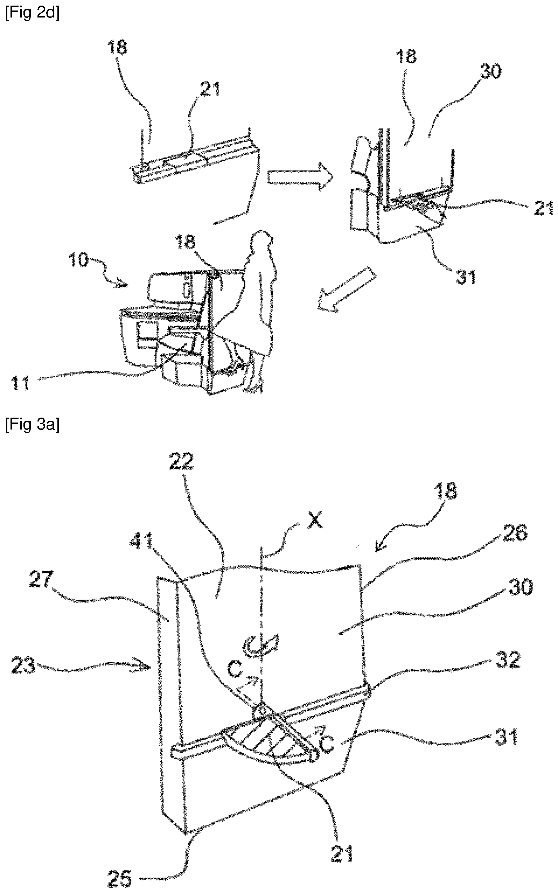

Figure 2d depicts a use of the step assembly of figures 2a-2c and illustrates that, in order to move the step 21 from the stowed position to the deployed position, one can simply pull the step in a direction away from the structural element 18, until the enlarged portion of the step 21 abuts the guiding support 35. Once in the deployed position, one can stand on the step 21 to reach high areas, such as overhead storage compartments.

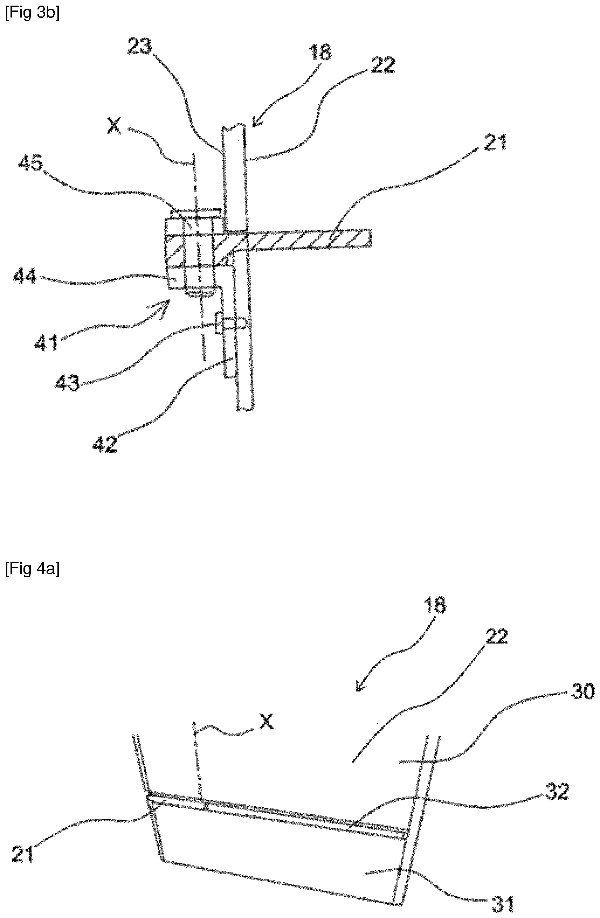

According to a second embodiment of the present invention as depicted in relation with figures 3a and 3b, the step 21 is rotatably connected to the structural element 18 of the furniture 10 around a pivot axis X.

In a particular embodiment, the pivot axis X may be vertical, so that the step 21, more specifically an upper face of the step 21 forming a step surface on which on can stand on, extends within the same horizontal plane in the stowed position and in the deployed position.

As illustrated in figure 3b, a guiding support 41 may comprise a fastening portion 42. The fastening portion 42 may comprise an aperture allowing insertion of a fastening device 43 in order to fasten the guiding support 41 to the rear face 23 of the structural element 18. The fastening device 43 may be a screw, a rivet... Alternatively and/or additionally, the fastening device 43 may be a chemical fastening device, such as glue or any other fastening device adapted to the application.

In a particular embodiment of the invention, the guiding support 41 comprises at least one guiding portion 44. The guiding portion 44 may comprise an aperture dedicated to receive a pivot member 45, such as a pin, forming the pivot axis X. Specifically, the pivot member 45 can be inserted into a hole made in the step 21 and the aperture of the guiding support 41.

In the side view according to figure 3b, the fastening portion 42 can extend perpendicularly with regard to the guiding portion 44, so that the guiding support 41 may have a L-shape.

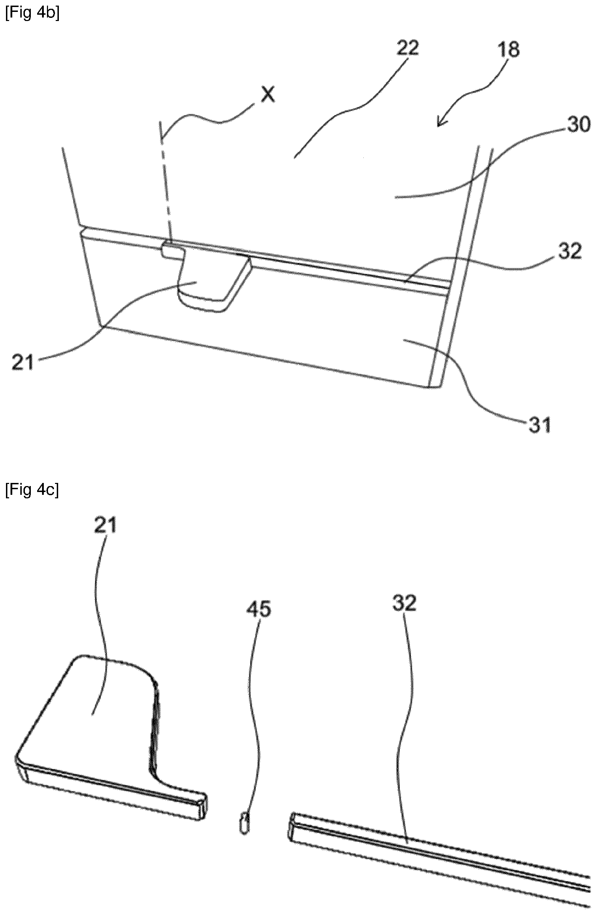

The step 21 can move from the stowed position to the deployed position by a rotation, particularly of an angle of 90 degrees as illustrated by figure 3a or by of an angle of 180 degrees as illustrated by figure 4a and 4b. The step 21 can move from the stowed position to the deployed position by a rotation of any other angles suitable to the application.

In the embodiment of figures 4a, 4b, and 4c, the pivot member 45 forming the pivot axis X may cooperate with the step 21 and the bumper 32 without the use of a guiding support 41.

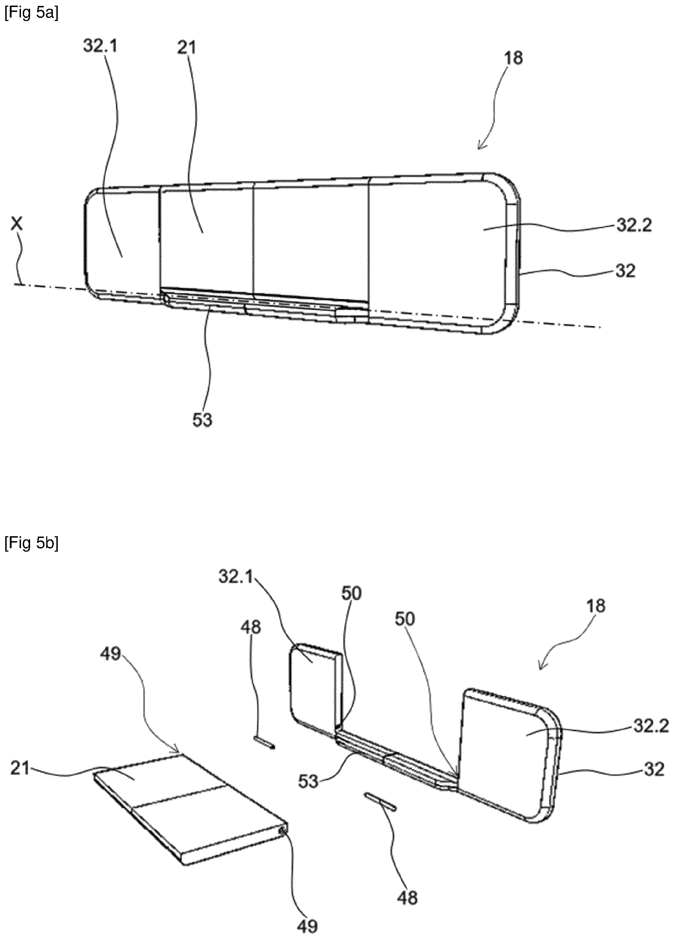

According to a third embodiment of the present invention as depicted in relation with of figures 5a and 5b, the pivot axis X may be horizontal, so that the step 21, more specifically the upper face of the step 21 forming the step surface on which one can stand on, extends within two different planes when in the stowed position and when in the deployed position.

Specifically, the step 21, more specifically the upper face of the step 21 forming the step surface on which one can stand on, extends within a vertical plane in the stowed position, and in a horizontal plane in the deployed position.

In that respect, the pivot axis X may be made of two pivot members 48, such as pins, which are positioned at two opposite lateral faces of the step 21. Each pivot member 48 engages an aperture 49 made within a lateral face of the step 21 and a corresponding aperture 50 made within the structural element 18, e.g. a face of the bumper 32. The face of the bumper 32 comprising the aperture 50 receiving the pin 48 is positioned in front of the lateral side of the step 21 comprising the aperture 49 receiving the pin 48.

When the step 21 is in the stowed position, the step 21 extends within the thickness of the structural element 18, which may be the bumper 32.

As shown in the particular embodiment of figures 5a, in the stowed position, the front face of the step 21 and the front face of the bumper 32 extends substantially within the same vertical plane. Also, the rear face of the step 21 and the rear face of the bumper 32 extends substantially within the same vertical plane.

In the specific embodiment, a protrusion 53 may be positioned below the pivot axis X to support the weight of the one standing on the step 21 in the deployed position. The protrusion 53 connects two lateral portions 32.1, 32.2 of the bumper 32. The lateral portions 32.1, 32.2 are positioned on either side of the step 21. Each lateral portion 32.1, 32.2 comprises an aperture 50 receiving a corresponding pin 48.

In this embodiment, the bumper 32 and the step 21 form an external kit that can easily be fastened onto a face, in particular a front face, of a structural element 18. To this end, the lateral portions 32.1, 32.2 may comprise fastening devices, such as screws, rivets, or a chemical fastening device comprising glue or any other fastening device adapted to the application.

The step 21 may have a flat shape allowing to support the majority of the surface of the foot of a human being, e.g. a passenger or a flight attendant.

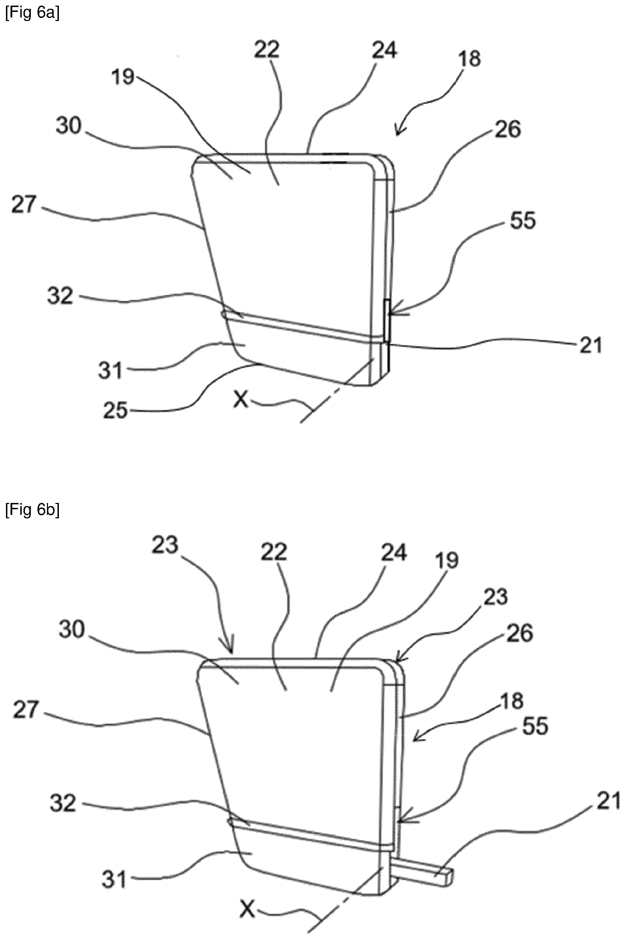

According to a fourth embodiment of the present invention as depicted in relation with figures 6a and 6b, the step 21 is positioned on a lateral face 26 of the structural element 18, such as an armrest 19.

Figure 6a and 6b show a particular embodiment of an armrest 19 movable vertically between a raised position and a lowered position.

The step 21 may be positioned within a cavity 55, when in the stowed position. The cavity 55 may be made in the lateral face 26 of the structural element 18, particularly within the thickness of the structural element 18. The thickness of the structural element 18 extends perpendicularly to the front face 22 and the rear face 23 of the structural element 18.

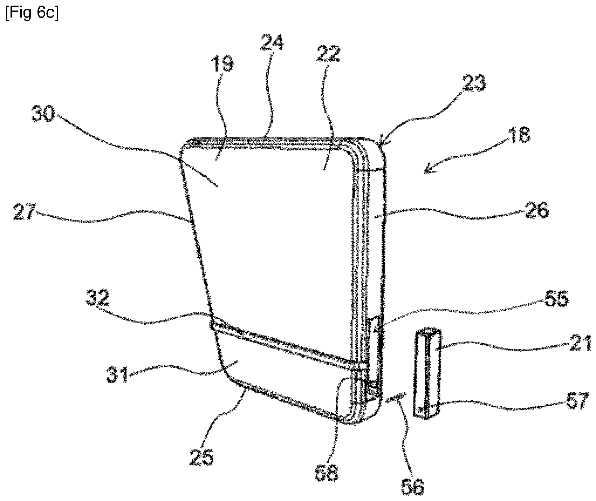

As illustrated in figure 6c, a pivot member 56, such as a pin, forming the pivot axis X, is positioned in an aperture 57. Specifically, the aperture 57 can be made through the step 21. An end of the pivot member 56 can be engaged in a aperture 58, which can be made within an internal wall of the cavity 55. Preferably, two apertures 58 are made within two opposite internal faces of the cavity 55, in which is engaged respective ends of the pivot member 56.

The step 21 may have an elongated shape. Such a configuration allows to support only a portion of the surface of a foot of a human being, e.g. passenger or a flight attendant.

The step 21 may have a parallelepiped shape extending longitudinally in a horizontal direction, when the step 21 is in the deployed position.

When the step 21 is in the stowed position, the step 21 extends within the thickness of the structural element 18 in a vertical direction.

As shown in figure 6a, when the step 21 is in the stowed position, a lateral face of the step 21 and the lateral face 26 of the structural element 18 extends substantially in the same vertical plane. The step 21 is flush with the lateral face 26 of the structural element 18, such as the armrest 19.

According to the invention, the furniture 10 equipped with the step 21 may be any aircraft cabin equipment, such as a seat, a seating unit, a cabin partition, a monument, a toilet module, a lavatory module, a galley, a coat closet, a class divider, an aircraft cabin equipment door..., which comprises a structural element. Different arrangements of the components depicted in the drawings or described above, as well as components not shown or described are possible. Similarly, some features and sub-combinations are useful and may be employed without reference to other features and sub-combinations.

Embodiments of the invention have been described for illustrative and not restrictive purposes, and alternative embodiments will become apparent to readers of this patent. Accordingly, the present invention is not limited to the embodiments described above or depicted in the drawings, and various embodiments and modifications may be made without departing from the scope of the claims below. Where in the foregoing description, integers or elements are mentioned which have known, obvious or foreseeable equivalents, then such equivalents are herein incorporated as if individually set forth. Reference should be made to the claims for determining the true scope of the present invention, which should be construed, so as to encompass any such equivalents.

It will also be appreciated by the reader that integers or features of the invention that are described as preferable, advantageous, convenient or the like are optional and do not limit the scope of the independent claims. Moreover, it is to be understood that such optional integers or features, whilst of possible benefit in some embodiments of the invention, may not be desirable, and may therefore be absent, in other embodiments.

## Claims

1. Step assembly for a furniture (10) comprising a structural element (18) **characterized in that** it comprises a step (21) movable relative to the structural element (18) of the furniture (10) between
- a stowed position, in which the step (21) is flush with regard to the structural element (10), and
- a deployed position, in which the step (21) protrudes with regard to the structural element (10) to provide a step surface on which one can stand on.

2. Step assembly according to claim 1, **characterized in that** the structural element (18) comprises an upper portion (30), a lower portion (31) and a bumper (32) positioned between the upper portion (30) and the lower portion (31), the step (21) being integrated within the bumper (32).

3. Step assembly according to any of the preceding claims, **characterized in that** the step (21) is slidably connected to the structural element (18).

4. Step assembly according to claim 3, **characterized in that** it comprises a guiding support (35) fastened to a rear face of the structural element (18), the guiding support (35) providing a guiding in translation of the step (21) between the stowed position and the deployed position.

5. Step assembly according to claim 3 or 4, **characterized in that** the step (21) extends within the same horizontal plane in the stowed position and in the deployed position.

6. Step assembly according to any of the preceding claims, **characterized in that** the step (21) is rotatably connected to the structural element (18) around a pivot axis (X).

7. Step assembly of claim 6, **characterized in that** the pivot axis (X) is substantially vertical, so that the step (21) extends within the same horizontal plane in the stowed position and in the deployed position.

8. Step assembly of claim 6, **characterized in that** the pivot axis (X) is substantially horizontal, so that the step (21) extends within two different planes when in the stowed position and when in the deployed position.

9. Step assembly according to any of the preceding claims, **characterized in that** the step (21) is positioned on a lateral face (26) of the structural element (18).

10. Step assembly according to claim 9, **characterized in that** the step (21) is positioned within a cavity (55), when the step (21) is in the stowed position.

11. Step assembly according to claim 10, **characterized in that** the cavity (55), is made in a lateral face (26) of the structural element (18), particularly within the thickness of the structural element (18).

12. Step assembly according to any of the preceding claims, **characterized in that** the step (21) has an elongated and/or a flat shape.

13. Furniture (10) comprising a step assembly according to any of the preceding claims, **characterized in that** the furniture (10) is a seat, a seating unit, a cabin partition, a monument, a toilet module, a lavatory module, a galley, a coat closet, a class divider and/or an aircraft cabin equipment door.

14. Furniture (10) according to claim 13, **characterized in that** the structural element (18) is a passenger seat (11), an element of a seat structure (12), a seat backrest (15), a side module (17), a fixed shell and/ or an armrest (19).
